**Europäisches Patentamt**

**European Patent Office**

**Office européen des brevets**

(19)

(11) Publication number : **0 478 345 A2**

# EUROPEAN PATENT APPLICATION

(12)

(21) Application number : **91308824.1**

(22) Date of filing : **27.09.91**

(51) Int. Cl.⁵ : **G06K 7/14**

(30) Priority : **28.09.90 US 590630**

(43) Date of publication of application :
**01.04.92 Bulletin 92/14**

(84) Designated Contracting States :
**DE FR GB**

(71) Applicant : **XEROX CORPORATION**
**Xerox Square - 020**
**Rochester New York 14644 (US)**

(72) Inventor : **Blitz, William A.**
**1084 Bright Stream Way**
**Webster, New York 14580 (US)**
Inventor : **Triplett, Roger L.**
**1764 Baird Road**
**Penfield, New York 14526 (US)**

(74) Representative : **Johnson, Reginald George et al**
**Rank Xerox Patent Department, Albion House,**
**55 New Oxford Street**
**London WC1A 1BS (GB)**

(54) **Process for decoding bar codes.**

(57)    A process for reliably decoding bar codes on separators for use in combination with the documents of a print job to input programming instructions to an electronic reprographics/printing machine in which variable decoding threshold values are calculated and updated for each bar code in accommodation of the image condition of the bar code.

EP 0 478 345 A2

**UNDER-TONED or POOR CONTRAST BAR CODE**
**Wide = 3 x Narrow**
**Black Threshold = 10**
**White Threshold = 22**

COUNTS ⟶   15   11   5   33   5   11

139-1   139-2   139-3   139-4   139-5   139-N

## FIG. 7

The invention relates to a process for decoding bar codes, such as on job and page separators having bar codes for programming jobs on high speed electronic reprographic/printing machines, and more particularly to an improved process for accommodating poor image quality of the bar codes to assure accurate bar code reading and decoding.

High speed electronic copier, printing, and reprographics machines convert original images into image signals or pixels, and in that form process the image signals to provide the desired output which typically is in the form of prints. Machines of this type are not only capable of processing large numbers of documents at once but of also providing a wide variety of document and image process options as for example, image cropping, enlargement and reduction, merging, etc. This however typically results in large amounts of operator time and effort being required to program the jobs, load the documents into the document feeder etc.

To enhance productivity and reduce the need for continuous operator involvement and attention, control sheets or separators, inserted at selected points in the document stack to segregate and distinguish different jobs from one another and to program the machine have been suggested in the prior art as evidenced by U.S. Patents Nos. 4,248,528 to Sahay et al, 4,687,317 to Appel et al, and 4,716,438 to Farrell. But, in the Sahay et al patent, a separate reader is employed to read and decipher the control data on the control sheet, adding to the complexity and expense of the machine. In that system, the reader must be positioned at a point above the document stack in order to view the separator sheets, a position which can interfere with access to the document supply tray and which in some cases can limit the maximum number of documents that can be placed in the document supply tray. In Appel et al, there is provided a system using a light detector to scan the bar code of a user's credit card when performing editing operations.

In Farrell, the individual separators bear a bar code which when read by the machine scanning array, is decoded to distinguish the separator from an ordinary document and to identify a previously input job program which the machine uses to run the job without further operator programming involvement. However, the bars in bar codes of this type are not always uniform in size or shape. This in turn leads to reading inaccuracies and improper programming of the job. This is especially so in cases where the separator sheet has been copied and due the condition of the original from which the copy or copies are made or the operation of the copier on which the copies are made, the bars that comprise the bar code have become so wide or so narrow that accurate decoding of the bar code is impossible. As a result, the wrong program is run for the job.

It is an object of the present invention to strive to overcome the problems presented by the prior art by providing a process for reliably decoding a bar code having wide and narrow bars in which the odd numbered bars of the code are a first color and the even number bars of the code are a second color wherein the distinctions between bars is hindered as a result of distortion in the width of the bars.

Accordingly, the present invention provides a process for reliably decoding a bar code having wide and narrow bars in which the odd numbered bars of said code are a first color and the even numbered bars of said code are a second color wherein the distinctions between bars is hindered as a result of distortion in the width of said bars, including providing a known bar code pattern of at least one wide and one narrow bar of said first color with one bar of said second color therebetween, scanning said bar code and providing a count representative of the width of said bars in said bar code, characterised by averaging the count of said first color wide and narrow bars in said known bar code pattern to provide a first threshold value to treshold the count representative of the width of the bars of said first color, averaging the count of said first color wide bar and said one second color bar in said known bar code pattern to provide a second threshold value to threshold the count representative of the width of the bars of said second color, and using said first and second threshold values to threshold the counts representative of the width of the bars in said bar code to decode said bar code and provide binary equivalent of said bar code.

In one embodiment of the invention there is provided a process for enhancing detection of bar codes in real time in a single pass where the width of the bars may vary, including providing each of said bar codes with a fixed black-white and wide-narrow bar size pattern over at least the first three bars of said code, with at least one wide and one narrow black bar and one narrow white bar therebetween, scanning said bar code and providing a count representing the width of each bar scanned, characterised by averaging the counts for said first wide and narrow black bars to provide a black threshold value, averaging the counts for said first wide black bar and said first narrow white bar to provide a temporary white threshold value, on detection of a wide white bar following scanning of said fixed bar size pattern, updating said white threshold value by averaging the counts for said first narrow white bar and said wide white bar to provide a new second white threshold value, using said black threshold value to threshold the counts of said black bars obtained while scanning the entire bar code to reliably detect size of said black bars, and using said new second white threshold to threshold the counts of said white bars obtained while scanning the entire bar code to reliably detect the size of said white bars whereby to read accurately said bar code.

The invention will be described further, by way of example, with reference to the accompanying drawings, in which:-

Figure 1 is a plan view showing details of a job and page separator having a bar code for programming an electronic reprographic/printing machine for a print job;

Figure 2 is an enlarged view showing details of the bar code shown in Figure 1;

Figure 3 is a timing chart depicting sampled video obtained from scanning the bar code example of Figure 2 and the resulting interrupt signals that are derived therefrom;

Figure 4 is a block diagram of the system for decoding separator bar codes in accordance with an embodiment of the present invention;

Figure 5 is a view depicting a segment of a nominal separator bar code;

Figure 6 is a view depicting a segment of a separator bar code in which the bar code image is overtoned resulting in oversized black bars and correspondingly undersized white bars; and

Figure 7 is a view depicting a segment of a separator bar code in which the bar code image is undertoned resulting in undersized black bars and correspondingly oversized white bars.

While the present invention will hereinafter be described in connection with a preferred embodiment thereof, it will be understood that it is not intended to limit the invention to that embodiment. On the contrary, it is intended to cover all alternatives, modifications, and equivalents as may be included within the scope of the invention as defined by the appended claims.

In the aforementioned Farrell Patent 4,716,438, which is incorporated by reference herein, there is disclosed a process for detecting and reading bar codes on control sheets such as job and page separators interleaved with the documents to be scanned by an electronic reprograhic printing machine. There the bar codes serve to identify the previously input job programming instructions for processing the documents.

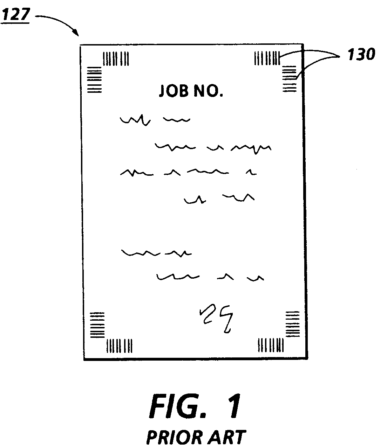

Referring to Figures 1-4, separators 127 of the type disclosed by the aforementioned Farrell patent have an optically detectable bar code 130. Where used, the operator enters the particular job instructions together with a specific job number which is represented by the bar code 130. The separator is then interleaved with the documents at the correct position in the document tray so that when scanned and the image signal obtained decoded, the job number is identified and the job instructions associated with that number accessed to program the machine to run the job.

Bar codes 130 are a 'matrix 2 of 5 code'. As will be understood, the 'matrix 2 of 5 code' is composed of a series of bars 139-1, 139-2, 139-3, ...139-n comprising wide and narrow black bar 140, 141 respectively and intervening wide and narrow white bars 144,145. In this code type, a wide bar 140 or wide space 144 is used to represent a binary "1" while a narrow bar 141, 145 is used to represent a binary "0". A complete bar code 130 consists of a start pattern 147, five message characters 148, and a checksum character 149 followed by a stop pattern 150.

Decoding is done in software with a transition sensor 158 serving to provide interrupt signals 162 at each transition from "1" to "0" (i.e. from black-to-white) and from "0" to "1" (i.e. from white-to-black). The interrupt signals 162 are input to a microcontroller 160 programmed with decoding software to identify the presence of a separator 127 and decode the bar code 130 thereon. In this process, the software measures the time between interrupts to distinguish wide and narrow bars from one another by a software loop which increments a running width count using a counter 172. An interrupt service routine reads the count on the counter 172 and stores the values in a buffer 174 while the counter is reset to zero and the count loop resumed.

The characters in the bar code 130 are reconstructed by converting the width counts in buffer 174 to binary values of "1" or "0" based on whether the width of the bar is greater than or less than a fixed black and white threshold.

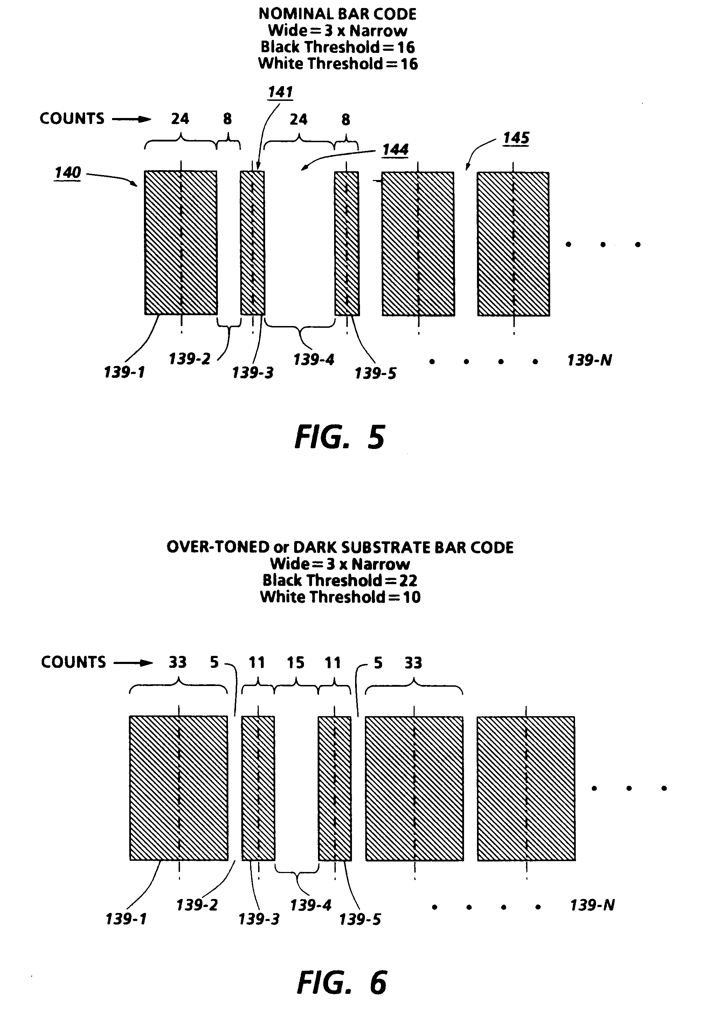

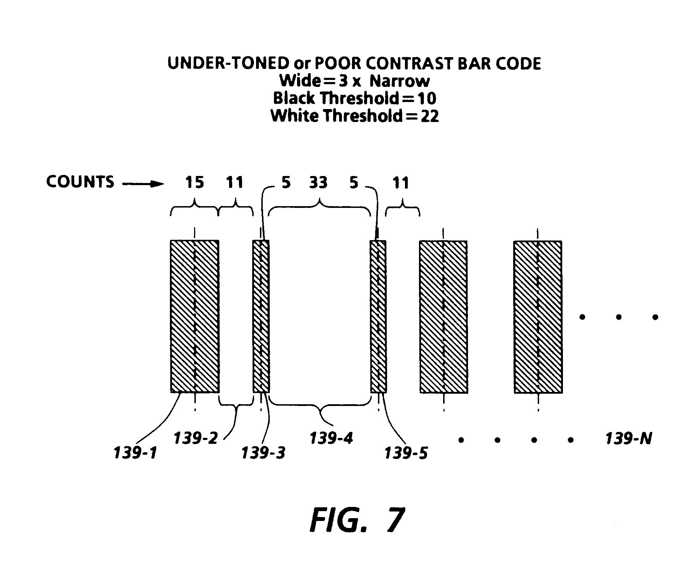

Referring to Figures 5-7, since some job programs are typically used repeatedly, it is desirable to retain the programs in memory and thus avoid the need to re-program each time the job is printed. Further, to provide high throughput, scanning is typically performed in a single pass so that checking the accuracy of the scan of the bar code is not normally possible. Since separators are normally retained as part of a finished job for job identification purposes, additional copies of the separators for any stored job programs must be made. However, bar codes 130 can degrade as a result of repeated separator copying. For example, and referring to the example shown in Figure 6, where overtoning of the bar coded image occurs during the copying process, the width of the black bars 140, 141 increases. This in turn reduces the width of the white bars 144, 145 between the black bars. And, as demonstrated by the example shown in Figure 7, in cases where the bar coded image has been undertoned during the copying process, the width of the black bars 140, 141 decreases. This in turn increases the width of the white bars 144, 145.

While some change in the size of the bars of the bar code is allowable, a substantial change in the size of the bars can result in failure of the decoding system to accurately identify and distinguish wide and narrow bars from one another, with resultant inaccurate decoding of the bar code and programming of the machine.

The problem can be exacerbated where the bar becomes smudged from dirt, dust, or repeated handling.

This further renders the separation between the bars difficult to detect.

To obviate the foregoing problem, there is provided a threshold independent system that optimizes the reliability of bar detection and reading across a wide variety of bar code quality levels, information packing density, and sampling velocities.

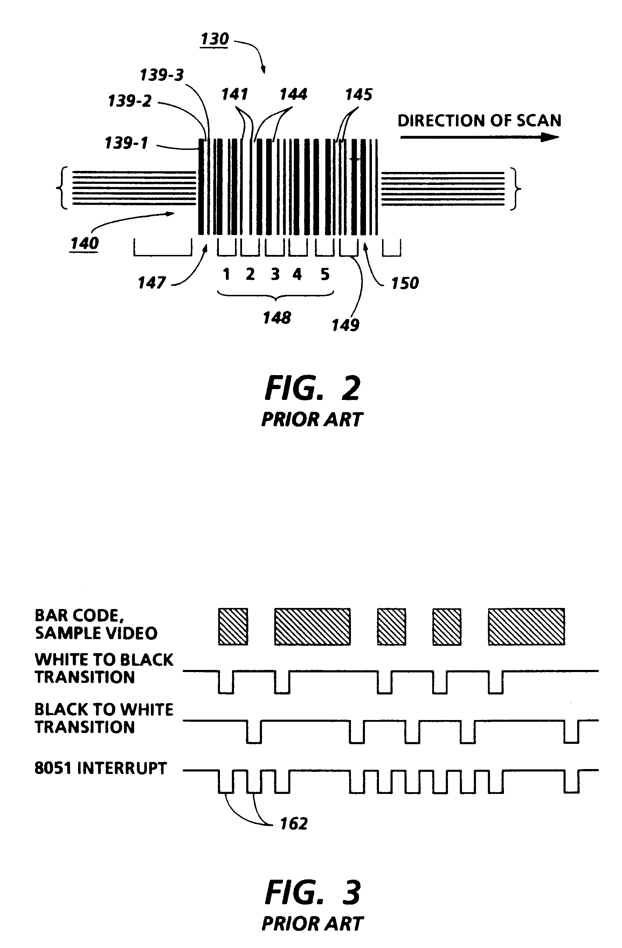

Referring now particularly to Figures 2, 4 and 5, by definition, the first bar 139-1 of the bar code 130 is always black and always wide, the second bar 139-2 is always white and always narrow, and the third bar 139-3 is alway black and always narrow. Using this information, and referring to the software program **ReConstructChr:Procedure** (Copyright (C), 1989, Xerox Corporation-All Rights Reserved) in the Appendix hereto, the black threshold $T_B$ for all bars 140, 141 is determined by adding the counts representing the first wide black bar 139-1 with the first narrow black bar 139-3 together and dividing by 2 **(BlackTresh = SHR ((BarOne + BarThree)0,1)**. The number $T_B$ obtained is thereafter used to threshold the counts representative of the black bars 140, 141 stored in buffer 174.

To obtain a white threshold for processing the white bars 144, 145, a temporary white threshold $T_W'$ is obtained by adding the count for the first wide black bar 139-1 and the white count for the first narrow white bar 139-2 and dividing the sum by 2 **(WhiteThresh = SHR ((BarOne + WhiteNarrow),01)**.

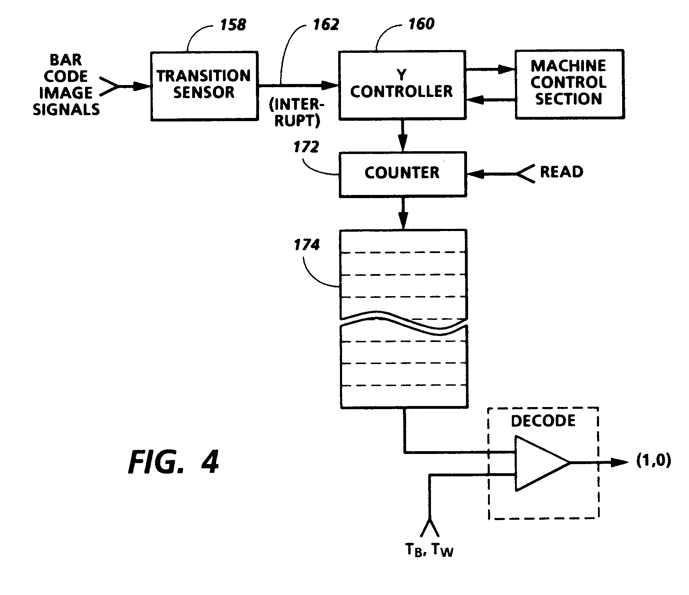

To obtain a permanent white threshold $T_W$, a new white threshold is calculated on detection of the first wide white bar 144. The permanent white threshold $T_W$ is obtained by adding the first narrow white bar 139-2 and the first wide white bar detected (139-4 in the example shown in Figure 4) and dividing by 2 **(WhiteThresh = SHR ((BarCount + WhiteNarrow),01)**.

Where no wide white bar 144 appears in the bar code 130 being processed, the temporary white threshold $T_W'$ is used throughout.

Where the count **(BarCount)** on counter 172 is greater than the black threshold, the bar is presumed to be wide **(If BarCount > BlackTresh/*Wide*/)**. Where the count **(BarCount)** is greater than the black threshold $T_W$ divided by 5 **(BarCount > (BlackThresh/5)/*Narrow*/)**, the bar is presumed to be narrow.

A similar process occurs when processing and identifying wide and narrow white bars 144, 145 using the white thresholds $T_W$ and $T_W'$.

In the example depicted in Figure 5, bar code 130 has wide and narrow bars of nominal size, with the wide bars 140, 144 being 3 times wider than the narrow bars 141,145. In this example and using the counts depicted, the black ($T_B$) and white ($T_W$) thresholds are 16, i.e.,

$$T_B. = 24 + 8/2 = 16$$
$$T_W = 24 + 8/2 = 16.$$

Using the black and white thresholds of 16, the bar code segment shown in Figure 5 is decoded as: 1-0-0-1-0-....

In the example depicted in Figure 6, the black bars 140, 141 are wider that the white bars 144, 145. In this example, the black bars 140, 141 are 40% wider whith the white bars 144, 145 correspondingly 40% narrow (the size ratio between the wide and narrow bars remains at 3:1). If the fixed thresholds of the prior art were used (i.e., $T_W = 16$; $T_W = 16$), the bar code segment shown in Figure 6 would be decoded as: 1-0-0-0-1-....

As is evident, the decoding obtained is different from that obtained from decoding the ideal bar of Figure 5, with the result that a different job program would be erroneously selected, or in the case where no job program bearing the bar code number was found, a fault would be declared.

However, where the black and white thresholds are re-calculated in the manner described herein, the following thresholds are obtained.

$$T_B = 33 + 11/2 = 22$$
$$T_W = 5 + 15/2 = 10$$

Using the re-calculated black and white thresholds, the bar code segment of Figure 6 is decoded correctly as : 1-0-0-1-0-....

In the example depicted in Figure 7, the black bars 140, 141 are narrower that the white bars 144, 145. In this example, the black bars 140, 141 are 40% narrower while the white bars 144, 145 are 40% wider (the size ratio between the wide and narrow bars remains at 3:1). If the fixed thresholds of the prior art were used (i.e., $T_B = 16$; $T_W = 16$), the bar code segment shown in Figure 6 would be decoded as: 0-0-0-1-0- .... which is different than the decoding obtained from decoding the ideal bar of Figure 5.

Where the black and white thresholds are re-calculated in the manner described herein, the following thresholds are obtained.

$$T_B = 15 + 5/2 = 10$$
$$T_W = 11 + 33/2 = 22$$

Using the re-calculated black and white thresholds, the bar code segment of Figure 6 is also decoded as : 1-0-0-1-0-....

Bar code detection and decoding accuracy can also be enhanced by providing dual bar code samples, with each bar code sample read and where necessary, reconstructed in the manner described. The results of the two readings may then be compared to determine the accuracy of the decoding/reconstruction process.

While the invention has been described with reference to the structure disclosed, it is not confined to the details set forth, but is intended to cover such modifications or changes as may come within the scope of the following claims.

## APPENDIX

### ReConstructChr: Procedure

Copyright (C) 1989, Xerox Corporation. All Rights Reserved

```
/*-----------------------------------------------------------------------/
                  Character ReConstruction
---------------------------------------------------------------------------*/


Declare BarOne       Word;
Declare BarCount     Word;


Declare WhiteNarrow  Byte;
Declare BlackThresh  Byte;
Declare WhiteThresh  Byte;
Declare BarCodeChar  Byte;
Declare CharReg      Byte;
Declare BarThree     Byte;


Declare ThisBar      Bit;
Declare BlackBar     Bit;
Declare DoOneTime    Bit;


CharReg = 04;     /* Place detection Bit in Character Register */
Bar = 0;
BarCount = 0;
BarCodeChar = 0;
BlackBar = 01;    /* First Bar Wide Black by definition */
BAR = (LastOverFlowPosition + 01);
BarOne = Transitionarray(BAR);
BarThree = TransitionArray(BAR + 02);
DoOneTime = True;
             /* Set initial nominal value for Threshold */
If (BarOne > BarThree)
Then Do;
   BlackThresh = SHR((BarOne + BarThree),01);
   WhiteNarrow = TransitionArray(BAR - 01);
   WhiteThresh = SHR((BarOne + WhiteNarrow),01);
```

```
Do While BarCodeChar < 08;/* Begin decoding each Bit and begin each Character */
   BarCount = TransitionArray(BAR);        /* Load Next Count */


If BlackBar
Then Do;
   If BarCount > BlackThresh /* Wide */
   Then ThisBar = Wide;
   Else If BarCount > (BlackThresh / 5) /* Narrow */
      Then ThisBar = Narrow;
      Else Do;
         BAR = BAR + 01;
         BarCount = BarCount + TransitionArray(BAR);


         BAR = BAR + 01;
         BarCount = BarCount + TransitionArray(BAR);


         If BarCount > BlackThresh
         Then ThisBar = Wide;
         Else ThisBar = Narrow;
         End;
   End;  /* If BlackBar */


Else Do; /* White Bar */
   If BarCount > WhiteThresh /* Wide */
   Then Do;
      ThisBar = Wide;
      If DoOneTime
      Then Do;
         DoOneTime = False;
         WhiteThresh = SHR((BarCount + WhiteNarrow),01);
         End;
      End;


   Else If BarCount > (WhiteThresh / 5) /* Narrow */
      Then ThisBar = Narrow;
      Else Do;
```

```
        BAR = BAR + 01;
        BarCount = BarCount + TransitionArray(BAR);


        BAR = BAR + 01;
        BarCount = BarCount + TransitionArray(BAR);


        If BarCount > WhiteThresh
        Then ThisBar = Wide;
        Else ThisBar = Narrow;
        End;
     End; /* White */


   BlackBar = NOT(BlackBar); /* Invert the Bar threshold */
   CharReg = SHL(CharReg,01);


   If ThisBar /* 1 = Wide */
   Then CharReg = (Wide OR CharReg);  /* Shift Bit into LSB of Register */
   Else CharReg = (Narrow OR CharReg); /* Shift Bit into LSB of Register */
   If (CharReg AND 80H) = 0
   Then BAR = BAR + 01; /* If MSB = 1 the detection Bit has shifted out */
   Else Do;
      CharReg = (CharReg AND 1FH);  /* Mask Out detection Bit */
      Do Case BarCodeChar;
        Do;
          If (CharReg < > FlagBit)
          Then Call Terminate;
          End;
        Call ParityCheck(BarCodeChar,CharReg);   /* 1 */
        Call ParityCheck(BarCodeChar,CharReg);   /* 2 */
        Call ParityCheck(BarCodeChar,CharReg);   /* 3 */
        Call ParityCheck(BarCodeChar,CharReg);   /* 4 */
        Call ParityCheck(BarCodeChar,CharReg);   /* 5 */
        Do;                    /* CheckBit */
          Call ParityCheck(BarCodeChar,CharReg);
          Call CheckSum;
          End;
        Do;
```

```
If (CharReg < > FlagBit)

Then Call Terminate;

End;

End; /* Case BarCodeChar */


BarCodeChar = BarCodeChar + 01; /* Increment Character Count */

CharReg = 04;    /* Re-initialize Character Register to start

                   over again with Next Character */

BAR = BAR + 02;    /* Skip interCharacter space Count */

BlackBar = True;

End;

End; /* Do While BarCodeChar < 8 */

End;

Else Call Terminate;

End ReConstructChr
```

## Claims

1.  A process for reliably decoding a bar code (130) having wide and narrow bars (139-1, 139-2) in which the odd numbered bars (139-1, 139-3) of said code (130) are a first color and the even numbered bars (139-2, 139-4) of said code (130) are a second color wherein the distintions between bars is hindered as a result of distortion in the width of said bars, including providing a known bar code pattern of a least on wide and one narrow bar (139-1, 139-3) of said first color with one bar (139-2) of said second color therebetween, scanning said bar code (130) and providing a count representative of the width of said bars in said bar code (130), characterised by averaging the count of said first color wide and narrow bars (139-1, 139-3) in said known bar code pattern to provide a first threshold value $(T_B)$ to threshold the count representative of the whidth of the bars of said first color, averaging the count of said first color wide bar (139-1) and said one second color bar (139-2) in said known bar code pattern to provide a second threshold value $(T_w')$ to threshold the count representative of the width of the bars of said second color, and using said first and second threshold values $(T_B, T_w')$ to threshold the counts representative of the width of the bars in said bar code (130) to decode said bar code (130) and provide binary equivalent of said bar code (130).

2.  A process as claimed in claim 1, characterised by locating said known bar code pattern in said bar code (130) so that said known bar code pattern is scanned first.

3.  A process as claimed in claim 1 or claim 2, characterised by providing said known bar code pattern with a narrow bar (139-2) of said second color between said wide and narrow bars (139-1, 139-3) of said first color.

4.  A process as claimed in any one of claims 1 to 3, characterised by scanning said bar code (130) for a wide bar (139-4) of said second color; and on detection of said second color wide bar (139-4), re-calculating said second threshold $(T_w)$ by averaging the count of said second color narrow bar (139-2) in said known bar code pattern with the count of said second color wide bar (139-4).

5.  A process for reliably decoding a bar code (130) having wide and narrow bars (139-1, 139-2) in which the odd numbered bars (139-1, 139-3) of said code (130) are a first color and the even numbered bars (139-2, 139-4) in said code (130) are a second color, including providing in said bar code (130) a predetermined bar code pattern comprising at least one wide and one narrow bar (139-1, 139-3) of said first color with one narrow bar (139-2) of said second color therebetween, scanning said bar code (130) and providing a count representative of the width of said bars in said bar code (130), characterised by averaging the counts of said first color wide and narrow bars (139-1, 139-3) in said predetermined bar code pattern to provide a first threshold value ($T_B$) for thresholding the counts representative of the width of the bars of said first color, averaging the counts of said first color wide bar (139-1) and said second color narrow bar (139-2) in said predetermined bar code pattern to provide a second threshold value ($T_w'$) for thresholding the counts representative of the width of the bars of said second color; and thresholding the counts representative of the bars in said bar code (130) using said first and second threshold values ($T_B$, $T_w'$) to provide binary equivalents for said wide and narrow bars in said bar code.

6. A process as claimed in claim 5, characterised by recalculating said second threshold ($T_w'$) on detection of a second color wide bar (139-4) by averaging the count of said one second color narrow bar (139-2) in said bar code pattern (130) with the count of said second color wide bar (139-4) to provide a new second color threshold ($T_w$), and using said new second threshold ($T_w$) in place of said second threshold ($T_w'$) to threshold said second color bars of said bar code (130).

7. A process for enhancing detection of bar codes (130) in real time in a single pass where the width of the bars may vary, including providing each of said bar codes (130) with a fixed black-white and wide-narrow bar size pattern over at least the first three bars of said code (130), with at least one wide and one narrow black bar (139-1, 139-3) and one narrow white bar (139-2) therebetween, scanning said bar code (130) and providing a count representing the width of each bar scanned, characterised by averaging the counts for said first wide and narrow black bars (139-1, 139-3) to provide a black threshold value ($T_B$), averaging the counts for said first wide black bar (139-1) and said first narrow white bar (139-2) to provide a temporary white threshold value ($T_w'$), on detection of a wide white bar (139-4) following scanning of said fixed bar size pattern, updating said white threshold value ($T_w'$) by averaging the counts for said first narrow white bar (139-2) and said wide white bar (139-4) to provide a new second white threshold value ($T_w$), using said black threshold value ($T_B$) to threshold the counts of said black bars obtained while scanning the entire bar code (130) to reliably detect the size of said black bars, and using said new second white threshold ($T_w$) to threshold the counts of said white bars obtained while scanning the entire bar code (130) to reliably detect the size of said white bars whereby to read accurately said bar code (130).

8. A process as claimed in claim 7, characterised by providing said fixed bar size pattern so that said fixed bar size pattern is scanned first when scanning said bar code (130).

9. A process for enhancing decoding of bar codes (130) having bars alternating between first and second colors (139-1, 139-2) wherein the width of the bars in said bar code (130) may vary rendering accurate decoding difficult, including providing said bar codes (130) with a predetermined wide-narrow bar pattern over at least the first N bars of said codes, said bar pattern having at least one wide and one narrow bar (139-1, 139-3) of said first color and one narrow bar (139-2) of said second color therebetween, scanning said bar code (130) and providing a count representing the width of each bar in said bar code (130), characterised by averaging the counts for said first color wide and narrow bars (139-1, 139-3) in said bar pattern to provide a first color threshold value ($T_B$), averaging the counts for said first wide bar (139-1) of said first color and said first narrow bar (139-2) of said second color in said bar pattern to provide a temporary second color threshold value ($T_w'$), using said first color threshold value ($T_B$) to threshold the counts representative of said first color wide and narrow bars (139-1, 139-3) obtained from scanning said bar code (130) to decode said first color bars, and using said second color threshold value ($T_w'$) to threshold the counts representative of said second color wide and narrow bar (139-2, 139-4) obtained from scanning said bar code (130) to decode said second color bars.

10. A process as claimed in claim 9, characterised by scanning said bar code (130) for a wide bar of said second color (139-4), and on detecting one of said second color wide bar (139-4), re-calculating said temporary second color threshold ($T_w'$) by averaging the counts for said second color narrow bar (139-2) in said bar pattern and said second color wide bar (139-4) to provide an updated second color threshold ($T_w$), and using said udpated second color threshold, value ($T_w$) in place of said second color threshold value ($T_w'$) to threshold the counts representative of said second color wide and narrow bars obtained from scanning said bar code (130) to decode said second color bars.

127 130

**JOB NO.**

# FIG. 1
## PRIOR ART

EP 0 478 345 A2

FIG. 2
PRIOR ART

BAR CODE, SAMPLE VIDEO

WHITE TO BLACK TRANSITION

BLACK TO WHITE TRANSITION

8051 INTERRUPT

162

FIG. 3
PRIOR ART

FIG. 4

NOMINAL BAR CODE
Wide = 3 x Narrow
Black Threshold = 16
White Threshold = 16

*141*

COUNTS ⟶ 24 8 24 8 *145*

*140* *144*

139-1 139-2 139-3 139-4 139-5 139-N

## FIG. 5

OVER-TONED or DARK SUBSTRATE BAR CODE
Wide = 3 x Narrow
Black Threshold = 22
White Threshold = 10

COUNTS ⟶ 33 5 11 15 11 5 33

139-1 139-2 139-3 139-4 139-5 139-N

## FIG. 6

UNDER-TONED or POOR CONTRAST BAR CODE
Wide = 3 x Narrow
Black Threshold = 10
White Threshold = 22

COUNTS ⟶  15  11   5  33  5   11

139-1   139-2   139-3   139-4   139-5   • • • •   139-N

## FIG. 7